(19) Europäisches Patentamt / European Patent Office / Office européen des brevets

(11) **EP 4 122 074 B1**

(12) **FASCICULE DE BREVET EUROPEEN**

(45) Date de publication et mention de la délivrance du brevet:
**10.04.2024 Bulletin 2024/15**

(21) Numéro de dépôt: **21719191.5**

(22) Date de dépôt: **15.03.2021**

(51) Classification Internationale des Brevets (IPC):
*H02J 3/38* $^{(2006.01)}$    *H02J 3/00* $^{(2006.01)}$
*H02J 15/00* $^{(2006.01)}$    *H02J 7/35* $^{(2006.01)}$
*G05B 13/02* $^{(2006.01)}$    *G06N 3/08* $^{(2023.01)}$

(52) Classification Coopérative des Brevets (CPC):
**H02J 3/381; G06N 3/048; G06N 3/08; H02J 3/003;
H02J 3/004; H02J 7/35; H02J 15/008;**
H02J 2300/24; H02J 2310/12; Y02E 10/56

(86) Numéro de dépôt international:
**PCT/FR2021/050430**

(87) Numéro de publication internationale:
**WO 2021/186126 (23.09.2021 Gazette 2021/38)**

(54) **PROCEDE ET DISPOSITIF DE COMMANDE D'UNE STATION D'ALIMENTATION ELECTRIQUE, PROGRAMME D'ORDINATEUR CORRESPONDANT ET INSTALLATION D'ALIMENTATION ELECTRIQUE**

VERFAHREN UND VORRICHTUNG ZUR STEUERUNG EINES ELEKTRISCHEN KRAFTWERKS, ENTSPRECHENDES COMPUTERPROGRAMM UND ENTSPRECHENDE STROMVERSORGUNGSEINRICHTUNG

METHOD AND DEVICE FOR CONTROLLING AN ELECTRICAL POWER STATION, CORRESPONDING COMPUTER PROGRAM AND POWER SUPPLY FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2020 FR 2002742**

(43) Date de publication de la demande:
**25.01.2023 Bulletin 2023/04**

(73) Titulaire: **Powidian**
**37700 La Ville aux Dames (FR)**

(72) Inventeur: **MORIN, David**
**91120 PALAISEAU (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**JP-A- 2015 148 934**

• **MORIN DAVID ET AL: "Energy Management of isolated DC microgrids with hybrid batteries-hydrogen storage system using Model Predictive Control and Wavelet Neural Networks based forecasts", 2019 21ST EUROPEAN CONFERENCE ON POWER ELECTRONICS AND APPLICATIONS (EPE '19 ECCE EUROPE), EPE ASSOCIATION, 3 septembre 2019 (2019-09-03), XP033665555, DOI: 10.23919/EPE.2019.8915136 cité dans la demande**

**Description**

La présente invention concerne un procédé et un dispositif de commande d'une station d'alimentation électrique, un programme d'ordinateur correspondant et une installation d'alimentation électrique.

L'article « Energy management of isolated DC microgrids with hybrid batteries-hydrogen storage system using model prédictive control and wavelet neural networks based forecasts » de Morin et al., publié en septembre 2019, décrit un procédé de commande d'une station d'alimentation électrique comportant au moins un dispositif de production d'énergie électrique à partir d'une source d'énergie renouvelable naturelle et au moins un dispositif de stockage de l'énergie électrique produite, du type comportant :

- la prédiction par un réseau de neurones à ondelettes d'une première valeur d'un paramètre extrinsèque à la station à un instant de prédiction futur prédéfini à partir de mesures du paramètre extrinsèque ; et

- la commande d'au moins un parmi les dispositifs de production et de stockage à partir d'une commande.

Dans cet article, la commande est déterminée à partir de la valeur du paramètre extrinsèque prédite par le réseau de neurones à ondelettes. Comme cela est indiqué dans cet article, un réseau de neurones à ondelettes initialement entraîné à partir de données d'entraînement initial, combine les capacités de prédiction d'un réseau de neurones avec la puissance analytique de la théorie des ondelettes, et est de ce fait bien adapté à la prédiction de séries temporelles non stationnaires, comme les paramètres extrinsèques à la station.

Un inconvénient du procédé de commande de cet article est son incapacité à prédire des évènements inédits, c'est-à-dire n'apparaissant pas dans les données d'entraînement initial qui proviennent de mesures réalisées au cours de l'année écoulée.

Il peut ainsi être souhaité de prévoir un procédé de commande permettant de remédier au moins en partie aux inconvénients précités.

Il est donc proposé un procédé de commande d'une station d'alimentation électrique, du type précité, caractérisé en ce qu'il comporte en outre :

- la prédiction d'une deuxième valeur du paramètre extrinsèque à l'instant de prédiction à partir de mesures du paramètre extrinsèque ayant toutes un âge inférieur à un seuil prédéfini, indépendamment de toute mesure du paramètre extrinsèque ayant un âge supérieur à ce seuil prédéfini, le réseau de neurones à ondelettes ayant été entraîné à partir de mesures du paramètre extrinsèque ayant un âge supérieur au seuil prédéfini ; et

- la détermination d'une troisième valeur prédite du paramètre extrinsèque à l'instant de prédiction à partir des première et deuxième valeurs prédites, la commande étant déterminée à partir de la troisième valeur prédite du paramètre extrinsèque ; et

- l'entraînement incrémental du réseau de neurones à ondelettes à partir d'une comparaison entre la première valeur prédite du paramètre extrinsèque et une mesure du paramètre extrinsèque à l'instant de prédiction.

Grâce à l'invention, l'entraînement incrémental permet l'apprentissage par le réseau de neurones de nouvelles situations et leur prédiction en cas d'occurrence future.

Cependant, l'acquisition de nouvelles informations dans le cadre de cet entraînement incrémental tend à écraser les anciennes informations obtenues lors de l'entraînement initial. Dit autrement, le réseau de neurones à ondelettes tend à perdre le bénéfice d'une partie de son entraînement initial au cours de son entraînement incrémental. Ce phénomène est appelé « oubli catastrophique ».

Or, les inventeurs ont remarqué que les réseaux de neurones à ondelettes sont plus sensibles que d'autres types de réseau de neurones à l'oubli catastrophique. Ils ont en outre trouvé que l'ajout d'une prédiction à mémoire courte, c'est-à-dire d'une prédiction, d'une part, utilisant des mesures récentes (dont l'âge est inférieur au seuil prédéfini) et, d'autre part, réalisée indépendamment de mesures anciennes (dont l'âge est supérieur au seuil prédéfini), est particulièrement efficace pour contrecarrer l'oubli catastrophique dans le cas spécifique d'une utilisation d'un réseau de neurones à ondelettes.

En outre, l'ajout de la prédiction à mémoire courte présente l'avantage de pouvoir prendre en compte rapidement un évènement inédit et améliorer la prédiction d'évènements similaires se produisant à courte échéance (c'est-à-dire à une échéance plus petite que la mémoire de la prédiction à mémoire courte).

De façon optionnelle, le paramètre extrinsèque est l'un parmi : une température ambiante de la station, un éclairement de panneaux solaires de la station et une puissance électrique consommée par une charge connectée à la station.

De façon optionnelle également, le réseau de neurones à ondelettes comporte des neurones auxquels des coefficients d'importance sont respectivement associés, et dans lequel, lors de l'entraînement incrémental, au moins une partie de ces neurones est modifiée en tenant compte de leurs coefficients d'importance associés.

De façon optionnelle également, chaque coefficient d'importance est représentatif d'un poids, dans la prédiction réalisée par le réseau de neurones, du neurone caché associé.

De façon optionnelle également, l'entraînement incrémental comporte :

- la détermination de distances entre la mesure du paramètre extrinsèque à l'instant de prédiction et respectivement les première et deuxième valeurs prédites du paramètre extrinsèque à l'instant de prédiction ; et

- en fonction des distances déterminées, l'ajout ou non d'un neurone supplémentaire au réseau de neurones à ondelettes.

De façon optionnelle également, la deuxième valeur prédite du paramètre extrinsèque est une moyenne des mesures du paramètre extrinsèque utilisées pour cette prédiction.

De façon optionnelle également, la commande est en outre déterminée à partir d'au moins une mesure d'au moins un paramètre d'état de la station.

De façon optionnelle également, la troisième valeur prédite est une somme pondérée des première et deuxième valeurs prédites.

Il est également proposé un programme d'ordinateur téléchargeable depuis un réseau de communication et/ou enregistré sur un support lisible par ordinateur, caractérisé en ce qu'il comprend des instructions pour l'exécution des étapes d'un procédé de commande selon l'invention, lorsque ledit programme est exécuté sur un ordinateur.

Il est également proposé un dispositif de commande d'une station d'alimentation électrique comportant au moins un dispositif de production d'énergie électrique à partir d'une source d'énergie renouvelable naturelle et au moins un dispositif de stockage de l'énergie électrique produite, comportant :

- un premier module de prédiction par un réseau de neurones à ondelettes d'une première valeur d'un paramètre extrinsèque à la station à un instant de prédiction futur prédéfini à partir de mesures du paramètre extrinsèque ; et

- un module de commande d'au moins un parmi les dispositifs de production et de stockage à partir d'une commande ;

caractérisé en ce que le dispositif comporte en outre :

- un deuxième module de prédiction d'une deuxième valeur du paramètre extrinsèque à l'instant de prédiction à partir de mesures du paramètre extrinsèque ayant toutes un âge inférieur à un seuil prédéfini, indépendamment de toute mesure du paramètre extrinsèque ayant un âge supérieur à ce seuil prédéfini, le réseau de neurones à ondelettes ayant été entraîné à partir de mesures du paramètres extrinsèque ayant un âge supérieur au seuil prédéfini ;
- un module de combinaison conçu pour déterminer une troisième valeur prédite du paramètre extrinsèque à l'instant de prédiction à partir des première et deuxième valeurs prédites, le module de commande étant conçu pour déterminer la commandes à partir de la troisième valeur prédite du paramètre extrinsèque ; et
- un module de mise à jour conçu pour entraîner incrémentalement le réseau de neurones à ondelettes à partir d'une comparaison entre la première valeur prédite du paramètre extrinsèque et une mesure du paramètre extrinsèque à l'instant de prédiction.

L'invention sera mieux comprise à l'aide de la description qui va suivre, donnée uniquement à titre d'exemple et faite en se référant aux dessins annexés dans lesquels :

[Fig. 1] la figure 1 est une représentation schématique d'un réseau électrique comprenant une station d'alimentation électrique et un dispositif de commande de cette station, selon un exemple non limitatif de mise en oeuvre de l'invention, et

[Fig. 2] la figure 2 est un schéma-blocs illustrant des étapes d'un procédé de commande de la station de la figure 1, selon un exemple non limitatif de mise en oeuvre de l'invention.

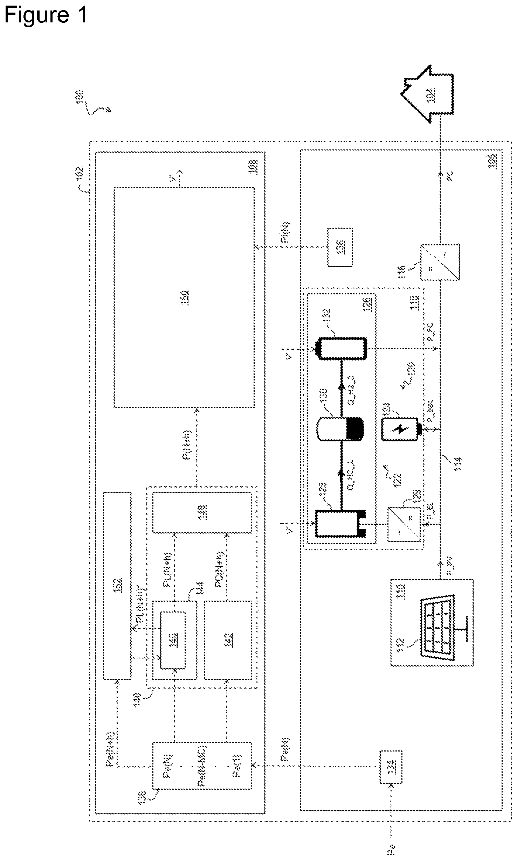

En référence à la figure 1, un exemple non limitatif d'un réseau électrique 100 mettant en oeuvre l'invention va à présent être décrit. Le réseau électrique 100 est, dans l'exemple décrit, un micro-réseau isolé (de l'anglais « isolated microgrid »).

Le réseau électrique 100 comporte une installation 102 d'alimentation électrique et une charge 104 alimentée électriquement par l'installation 102. La charge 104 comporte, par exemple, une ou plusieurs habitations implantées dans une région isolée non reliée à un réseau de distribution d'électricité global. L'installation 102 est autonome dans le sens où elle est destinée à répondre aux besoins électriques de la charge, et ce sans apport d'un réseau électrique global (national ou régional, comportant plusieurs sources électriques). Il sera apprécié que l'installation 102 peut néanmoins présenter une connexion au réseau électrique global, par exemple pour des raisons de sécurité ou bien pour faire de la réinjection électrique sur le réseau électrique global.

L'installation 102 comprend une station d'alimentation électrique 106 et un dispositif de commande 108 de la station 106 (appelé parfois en anglais « master controller »).

Pour produire de l'énergie électrique, la station 106 comprend au moins un dispositif 110 de production d'énergie électrique à partir d'une source d'énergie renouvelable naturelle présente dans l'environnement de la station 106. Dans l'exemple représenté, la station 106 comporte un seul dispositif de production d'énergie électrique 110 regroupant un ou plusieurs panneaux solaires 112, par exemple monocristallins, conçus pour produire de l'énergie électrique à partir de la lumière du soleil qu'ils reçoivent. Alternativement, la station 106 pourrait comporter, en complément ou bien à la place des panneaux solaires 112, d'autres types de dispositifs de production d'énergie électrique tels que, par exemple, une ou plusieurs éoliennes conçues pour produire de l'énergie électrique à partir du vent. Il est également possible d'envisager, comme dispositif de production 110, un barrage, par exemple un barrage au fil de l'eau, ou bien une centrale géothermique, même si leur production électrique est généralement assez stable.

De façon optionnelle, la station 106 peut en outre comporter au moins un dispositif de production d'énergie électrique pilotable comme par exemple un groupe électrogène.

Chaque dispositif de production d'énergie 110 (et, le cas échéant, chaque dispositif de production pilotable) est connecté à un bus 114 de tension continue, appelé bus DC (de l'anglais « Direct Current »). Le bus 114 est conçu pour présenter une tension continue de, par exemple, 48 V. Dans une variante non-représentée, le bus de la station 106 peut aussi être un bus de tension alternative, appelé bus AC (de l'anglais « Alternative Current »).

Comme la charge 104 nécessite une tension alternative dans l'exemple décrit, la station 106 comporte en outre un onduleur 116 au travers duquel la charge 104 est connectée au bus 114.

Le dispositif de production d'énergie électrique 110 fournit au bus 114 une puissance électrique produite, notée $P\_PV$, tandis que la charge 104 prélève de ce même bus 114 une puissance électrique consommée, notée PC. Or, la puissance produite $P\_PV$ et la puissance consommée PC varient dans le temps, généralement de manière décorrélée l'une de l'autre. Par exemple, l'éclairement solaire est faible le soir, tandis que les habitations ont besoin d'être éclairées à ce moment. Ainsi, la station 101 comprend aussi un système 118 de stockage de l'énergie électrique produite par le dispositif de production d'énergie électrique 110, conçu pour compenser la différence entre la puissance produite $P\_PV$ et la puissance consommée PC. Pour cela, le système de stockage 118 est conçu pour stocker l'énergie produite dans les moments où elle n'est pas utilisée et en la restituant ultérieurement lorsque la puissance consommée PC par charge 104 dépasse la puissance produite $P\_PV$.

Ce système de stockage 118 comporte, dans l'exemple décrit, un dispositif de stockage à court terme 120 et un dispositif de stockage à long terme 122.

En particulier, la station 106 s'appuie sur l'utilisation conjuguée d'au moins une batterie 124, par exemple une ou plusieurs batteries Lithium-Ion, pour le stockage à court terme et d'une chaîne hydrogène 126 pour le stockage à long terme. La chaîne hydrogène 126 comprend un électrolyseur 128 connecté au bus 114 au travers d'un onduleur 129 dans l'exemple décrit, un réservoir 130 de dihydrogène $H_2$ et une pile à combustible 132 connectée au bus 114.

En effet, la batterie 124 est conçue pour échanger une puissance électrique $P\_bat$ avec le bus 114 (prélevée du bus 114 ou bien restituée au bus 114) et est bien adaptée pour répondre à des variations rapides de la puissance consommée PC par rapport à la puissance produite $P\_PV$ mais présente généralement comme inconvénient de se décharger spontanément dans le temps et est donc mal adaptée à un stockage longue durée (plusieurs mois à plusieurs années, par exemple pour faire du stockage inter-saisonnier). En revanche, l'hydrogène peut se stocker sur de telles durées sans perte dans le réservoir 130.

Plus précisément, pour stocker de l'énergie, l'électrolyseur 128 est conçu pour fournir, à partir d'une puissance électrique $P\_EL$ prélevée du bus 114, un débit d'hydrogène $Q\_H2\_1$ alimentant le réservoir 130. Pour restituer de l'énergie, le réservoir 130 est conçu pour fournir un débit d'hydrogène $Q\_H2\_2$ à la pile à combustible 132 que cette dernière est conçue pour convertir en une puissance électrique $P\_FC$ fournie au bus 114.

Ainsi, la partie de la puissance électrique produite $P\_PV$ non utilisée par la charge 104 alimente la batterie 124 et/ou la chaîne hydrogène 126.

La puissance consommée PC par la charge 104 provient donc de la puissance électrique produite $P\_PV$ et/ou d'une puissance électrique $P\_bat$ restituée au bus 114 et/ou de la puissance électrique $P\_FC$ restituée par la chaîne hydrogène 126.

La station 106 comporte en outre un premier dispositif de mesure 134 conçu pour fournir des mesures au cours du temps d'un ou plusieurs paramètres extrinsèques Pe à la station 106. De préférence, le ou les paramètres extrinsèques Pe comportent au moins la puissance électrique consommée PC. Ce ou ces paramètres extrinsèques Pe comportent par exemple un ou plusieurs parmi : une température ambiante, un éclairement du ou des panneaux solaires et la puissance électrique consommée PC. Dans l'exemple décrit, ces trois paramètres extrinsèques Pe sont utilisés.

Dans d'autres modes de réalisation, d'autres paramètres extrinsèques Pe peuvent être mesurés par le premier dispositif de mesure 134, par exemple selon le type de dispositif de production d'énergie 110 utilisé. Par exemple, en cas d'utilisation d'éoliennes, le premier dispositif de mesure 134 peut être conçu pour fournir des mesures au cours du temps d'une vitesse du vent traversant les éoliennes.

La station 106 comporte en outre un deuxième dispositif de mesure 136 conçu pour fournir des mesures au cours du temps d'au moins un paramètre d'état Pi de la station 106, par exemple parmi : un état de charge de la batterie 124, la puissance électrique P_bat échangée par la batterie 124, un vieillissement de la batterie 124, un vieillissement de l'électrolyseur 128, une pression d'hydrogène dans le réservoir 130, un vieillissement de la pile à combustible 132 et une différence P_nette de puissance électrique entre une production maximale théorique des dispositifs de production électrique 110 de la station 106 et la puissance consommée PC par la charge 104.

Les vieillissements sont par exemple déduits d'autres paramètres de l'équipement considéré, qui sont mesurés. Par exemple, pour la batterie 124, ces paramètres peuvent comprendre sa tension électrique et son état de charge. Pour les autres équipements, ces paramètres peuvent comprendre leur puissance électrique et le nombre de cycle d'activation/désactivation de l'équipement.

La production maximale théorique des dispositifs de production électrique 110 est un paramètre qui peut être fixe (par exemple, dans le cas d'un groupe électrogène) ou bien varier au cours du temps par exemple du fait d'une dépendance à l'environnement de la station 106. Par exemple, la puissance maximale théorique de panneaux solaires dépend de la température ambiante et de l'irradiance, et la puissance maximale théorique d'éoliennes dépend de la force du vent.

Le dispositif de commande 108 va à présent être décrit plus en détail.

Le dispositif de commande 108 comporte tout d'abord une mémoire 138 conçues pour stocker les mesures du ou des paramètres extrinsèques Pe, fournies par le premier dispositif de mesure 134. Dans l'exemple décrit, ces mesures sont réalisées à échéances prédéfinies, séparées d'un intervalle de temps constant prédéfini. Cet intervalle de temps est par exemple de trente minutes. Ainsi, dans la suite de la description, chaque échéance sera identifiée par un nombre entier. Ainsi, la dernière échéance passée est identifiée par le nombre entier N, de sorte que la prochaine échéance future est identifiée par le nombre entier N+1. De manière générale, une échéance quelconque est identifiée par le nombre entier n. Lorsque l'échéance est passée, n est inférieur ou égal à N et lorsque l'échéance est à venir, n est supérieur à N. En outre, les mesures de chaque paramètre extrinsèque Pe seront notées par la suite Pe(n) avec n identifiant l'échéance à laquelle est réalisée la mesure. Ainsi, la dernière mesure réalisée est notée Pe(N).

Par mesure, il faut comprendre soit une mesure unique soit une combinaison de plusieurs mesures. Par exemple, le dispositif de mesure 134 peut être conçu pour réaliser des mesures à une fréquence plus élevée (par exemple toutes les minutes) et pour fournir, comme mesure à l'échéance Pe(n), une moyenne des mesures réalisées autour de l'échéance Pe(n).

En outre, toujours dans l'exemple décrit, les mesures du ou des paramètres d'état Pi sont réalisées à chaque nouvelle échéance N et notée Pi(N) pour cette nouvelle échéance N. Les mesures Pi(N) représente ainsi l'état de la station 106 à l'échéance N.

La mémoire 138 comporte plusieurs mesures réalisées au cours du temps. Ces mesures comportent des mesures récentes et des mesures anciennes, c'est-à-dire plus anciennes que les mesures récentes. En particulier, les mesures récentes ont toutes un âge inférieur à un premier seuil prédéfini, appelé seuil de mémoire courte et noté MC, tandis que les mesures anciennes ont toutes un âge supérieur à ce seuil de mémoire courte MC.

Ainsi, le premier dispositif de mesure 134 est conçu pour fournir à la mémoire 138, pour chaque paramètre extrinsèque Pe, une nouvelle mesure Pe(N) de ce paramètre extrinsèque Pe à chaque échéance N. La mémoire 138 est alors conçue pour enregistrer cette nouvelle mesure Pe(N) à la suite des mesures précédentes Pe(n<N).

Le dispositif de commande 108 comporte en outre un module de prédiction 140 conçu pour prédire une valeur de chaque paramètre extrinsèque Pe à au moins un instant futur prédéfini. Dans l'exemple décrit, le module de prédiction est conçu pour prédire une valeur du paramètre extrinsèque pour un nombre prédéfini H d'échéances futures. La ou les valeurs prédites sont notées P(N+h), avec h (appelé par la suite échéance future ou horizon) un entier valant de 1 à H (appelé par la suite horizon maximal). Par exemple, des prédictions sont réalisées pour les prochaines 24h, de sorte que l'horizon maximal H vaut 48.

Plus précisément, le module de prédiction 140 comporte un module de prédiction à mémoire courte 142 conçu pour prédire une valeur PC(N+h) de chaque paramètre extrinsèque Pe à l'instant futur prédéfini N+h à partir de mesures uniquement récentes de ce paramètre extrinsèque Pe. Cette valeur PC(N+h) est appelée par la suite valeur prédite à mémoire courte. Le module de prédiction à mémoire courte 142 est par exemple conçu pour réaliser une moyenne de mesures récentes du paramètre extrinsèque Pe, par exemple une moyenne des mesures réalisées à la même heure sur un nombre prédéfini de jours précédents. Dans l'exemple décrit où une mesure est réalisée toutes les 30 minutes (soit 48 mesures par jour), cette moyenne est réalisée sur les 7 jours précédents :

[Math. 1]

$$PC(N + h) = \frac{1}{7} \cdot \sum_{i=1}^{7} Pe(N + h - 48i)$$

Le module de prédiction 140 comporte en outre un module de prédiction à mémoire longue 144 conçu pour prédire une valeur PL(N+h) de chaque paramètre extrinsèque Pe à chaque instant futur prédéfini N+h à partir au moins de mesures anciennes de ce paramètre extrinsèque Pe. Cette valeur PL(N+h) est appelée par la suite valeur prédite à mémoire longue. En pratique, des mesures récentes du paramètre extrinsèque Pe peuvent également être utilisées, voire des mesures récentes et/ou anciennes d'au moins un autre paramètre extrinsèque Pe. Le module de prédiction à mémoire longue 144 comporte, dans l'exemple décrit, un réseau de neurones 146 dédié à chaque paramètre extrinsèque Pe et à chaque horizon h.

Ce réseau de neurones 146 est conçu pour recevoir en entrée au moins une partie des mesures récentes Pe(N - MC < n ≤ N) pour les utiliser pour prédire la valeur PL(N+h). Le nombre de mesures récentes utilisées par le réseau de neurones 146 est par exemple déterminé lors de son entraînement initial. Généralement, le réseau de neurones 146 utilise plus de mesures que le module de prédiction à mémoire courte 142, par exemple au moins deux fois plus. Dans l'exemple décrit, le réseau de neurones 146 utilise toutes les mesures récentes.

Ainsi, dans l'exemple décrit, l'âge maximal des mesures utilisées par chaque réseau de neurones 146 et par le module de prédiction à mémoire courte 142 est le même et égal au seuil de mémoire courte MC. Cependant, dans d'autres modes de réalisation, le ou les réseaux de neurones pourraient utilisées des données plus âgées que les données utilisées par le module de prédiction à mémoire courte 142.

Chaque réseau de neurones 146 comporte une couche d'entrée de neurones, une ou plusieurs couches cachées de neurones et une couche de sortie de neurones. Chacun des neurones du réseau de neurones 146 comporte au moins une entrée et au moins une sortie. Les entrées des neurones de la couche d'entrée forment des entrées du réseau de neurones 146 et les sorties des neurones de la couche de sortie forment des sorties du réseau de neurones 146. Pour les neurones de la ou des couches cachées, leurs entrées sont connectées aux sorties des neurones de la couche précédente et leurs sorties sont connectées aux entrées des neurones de la couche suivante. Chacun des neurones du réseau de neurones 146 comporte en outre une fonction d'activation définissant une valeur de la ou des sorties en fonction d'une valeur de la ou des entrées. Le réseau de neurones 146 est en outre à ondelettes, c'est-à-dire que la fonction d'activation de chaque neurone de la ou des couches cachées est une ondelette.

Par exemple, la couche de sortie est conçue pour réaliser une somme pondérée des sorties des neurones de la dernière couche cachée.

En outre, le réseau de neurones 146 comporte de préférence une seule couche cachée, ce qui a été déterminé comme généralement suffisant pour réaliser de bonnes prédictions en ne nécessitant que des ressources de calculs modérées.

Le module de prédiction 140 comporte en outre un module 148 de combinaison, pour chaque paramètre extrinsèque Pe, des deux valeurs prédites PL(N+h), PC(N+h), pour fournir la valeur prédite P(N+h) finale de ce paramètre extrinsèque Pe à l'instant futur prédéfini N+h. Dans l'exemple décrit, le module de combinaison 148 est conçu pour réaliser une moyenne pondérée des deux valeurs prédites PL(N+h), PC(N+h) :

[Math. 2]

$$P(N + h) = \propto \cdot PC(N + h) + \beta \cdot PL(N + h)$$

avec $\alpha$, $\beta$ deux coefficients de pondération.

Le dispositif de commande 108 comporte en outre un module de commande 150 conçu pour déterminer, à partir de la ou les valeurs prédites P(N+h) de chaque paramètre extrinsèque Pe et des mesures Pi(N) des paramètres d'état Pi fournies par le deuxième dispositif de mesure 136, une commande V' d'au moins un des dispositifs de production 110 et de stockage 120, 122 et pour appliquer cette commande V'. Dans l'exemple décrit, la commande V' est destinée à la pile à combustible 128 et/ou à l'électrolyseur 132 et peut prendre, pour chacun d'eux, deux valeurs commandant respectivement l'activation et la désactivation de la pile à combustible 128 et/ou à l'électrolyseur 132. Alternativement, d'autres types de commande pourraient être utilisés, comme par exemple des commandes d'un mode de fonctionnement particulier de l'électrolyseur 110 et/ou de la pile à combustible 112.

Le dispositif de commande 108 comporte en outre un module 152 de mise à jour du module de prédiction 140.

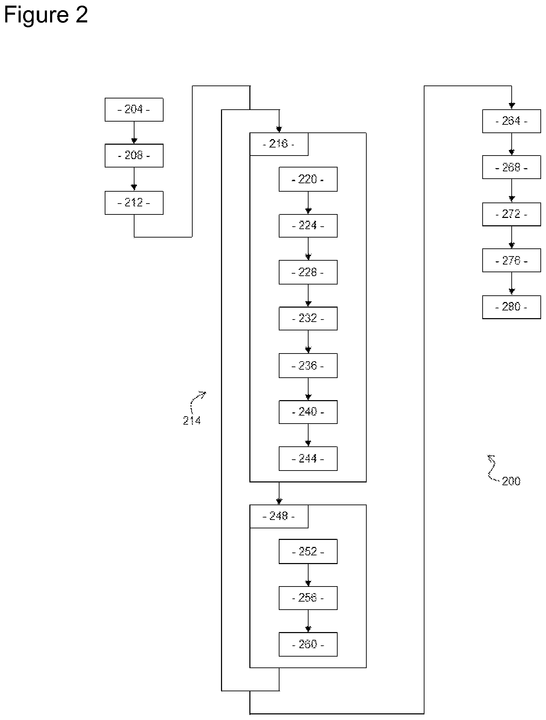

Les différentes fonctions des modules introduits ci-dessus seront détaillées dans la description du procédé de la figure 2.

Dans l'exemple décrit, le dispositif de commande 108 comporte un système informatique comportant une unité de traitement (telle qu'un microprocesseur) et une mémoire (telle qu'une mémoire principale) dans laquelle un programme d'ordinateur est destiné à être chargé, ce programme d'ordinateur contenant des instructions de programme d'ordinateur conçues pour être exécutées par l'unité de traitement. Ainsi, les modules décrits précédemment sont implémentés dans l'exemple décrit dans le programme d'ordinateur, sous forme de modules logiciels.

Alternativement, tout ou partie des modules pourrait être implémenté sous forme de modules matériels, c'est-à-dire sous forme d'un circuit électronique, par exemple micro-câblé, ne faisant pas intervenir de programme d'ordinateur.

En référence à la figure 2, un exemple non-limitatif de procédé 200 de commande de la station 106 va à présent être décrit.

Au cours d'une étape 204, chaque réseau de neurones 146 est initialement entraîné à partir de données d'entraînement. Ces données d'entraînement comportent des mesures s'échelonnant sur un intervalle de temps d'entraînement généralement long, par exemple un an, en tout cas un intervalle de temps ayant une durée supérieure au seuil de mémoire courte MC. Par exemple, les données d'entraînement comportent toutes les mesures prises à 30 minutes d'intervalle de sept jours consécutifs, de manière glissante sur une année. Cela permet d'obtenir un jeu d'entrée pour chaque demi-heure des 365 jours de l'année moins les sept derniers jours. C'est-à-dire, par exemple, 17 184 jeux d'entrée à fournir au réseau de neurones, pour un horizon de prédiction d'une demi-heure, avec la ou les valeurs à prédire connues pour chacun de ces jeux d'entrée. Ainsi, chaque réseau de neurones 146 garde en mémoire au moins une partie des événements qui se sont produits sur l'intervalle de temps d'entraînement. Pour cette raison, chaque réseau de neurones 146 permet de faire des prédictions à mémoire longue.

Au cours d'une étape 208, pour chaque réseau de neurones 146, un coefficient d'importance est associé à chaque neurone de la ou des couches cachées du réseau de neurones 146. Chaque coefficient d'importance est représentatif d'un poids du neurone associé dans la prédiction du réseau de neurones 146. Par exemple, lorsqu'une seule couche cachée est prévue et que la couche de sortie réalise la somme pondérée des sorties des neurones de cette unique couche cachée, le poids d'un neurone peut être un ratio de sa sortie pondérée par la prédiction totale (en valeur absolue), et le coefficient d'importance de ce neurone peut être une moyenne de ce poids sur un grand nombre de prédictions.

Au cours d'une étape 212, le dispositif de commande 108 commence à commander la station 106.

Par la suite, le procédé 200 comporte une boucle d'étapes 214 comportant les étapes 216 à 260 suivantes, cette boucle d'étape 214 étant réalisée pour chaque échéance N.

Au cours d'une étape 216, pour chaque échéance future (également appelée horizon h) sous l'horizon maximal H, le module de prédiction 140 prédit la valeur Pe(N+h) de chaque paramètre externe Pe à chaque échéance future N+h considérée.

L'étape 216 comporte les étapes 220 à 244 suivantes.

Au cours d'une étape 220, le premier dispositif de mesure 134 réalise, à l'échéance N, la nouvelle mesure Pe(N) du paramètre externe Pe.

Au cours d'une étape 224, la mémoire 138 enregistre la nouvelle mesure Pe(N) du paramètre externe Pe dans la mémoire 138, avec les mesures Pe(n<N) précédentes.

Au cours d'une étape 228, la mémoire 138 fournit les mesures récentes nécessaires au module de prédiction à mémoire courte 142.

Au cours d'une étape 232, le prédicteur à mémoire courte 142 détermine la valeur prédite à mémoire courte PC(N+h) de chaque paramètre externe Pe à chaque échéance future N+h.

Au cours d'une étape 236, pour chaque paramètre extrinsèque Pe, la mémoire 138 fournit les mesures nécessaires au réseau de neurones 146 associé à ce paramètre extrinsèque et à l'échéance future N+h considérée.

Au cours d'une étape 240, le réseau de neurones 146 détermine la valeur prédite à mémoire longue PL(N+h) du paramètre externe Pe à l'échéance future N+h considérée.

Au cours d'une étape 244, le module de combinaison 148 combine les valeurs prédites PC(N+h), PL(N+h) pour obtenir la valeur prédite P(N+h) finale.

Au cours d'une étape 248, le module de commande 150 détermine une commande V' à appliquer à la prochaine échéance N+1.

L'étape 248 comporte les étapes 252 à 260 suivantes.

Au cours d'une étape 252, le deuxième dispositif de mesure 136 fournit les mesures Pi(N) des paramètres d'état Pi.

Au cours d'une étape 256, le module de commande 150 détermine une suite de commandes à partir de la ou des prédictions P(N+h) de chaque paramètre externe Pe et des mesures Pi(N) du ou des paramètres d'état Pi.

Pour cela, le module de commande 150 recherche une suite de commandes qui, appliquée à un modèle numérique de la station 106 initialisé à partir des mesures Pi(N) du ou des paramètres d'état Pi, pour que ce modèle numérique fournisse, à partir de chaque valeur prédite Pe(N+h) de chaque paramètre extrinsèque Pe, des valeurs du ou des paramètres d'état Pi à un instant futur prédéfini (généralement l'horizon maximal H), minimisant une fonction d'objectif.

La fonction d'objectif attends donc en entrée le ou les paramètres Pi déterminés par le modèle numérique de la station 106 et, lorsque plusieurs objectifs sont visés, agrège ces différents objectifs de sorte que sa minimisation revient à chercher un compromis entre ces différents objectifs. Chaque objectif est par exemple pris parmi : la maximisation de la durée de vie de la pile à combustible 132, de l'électrolyseur 128 et/ou de la batterie 124, la maximisation de la disponibilité de l'énergie électrique fournie par la station 106 (i.e. le fait que la station soit le moins souvent possible dans l'incapacité de répondre aux sollicitations de la charge 104), et la minimisation de pertes d'énergie des convertisseurs électriques 116, 129 et de pertes d'énergie chimique de la batterie 124 et de la chaîne hydrogène 126.

Au cours d'une étape 260, le module de commande 150 sélectionne la première commande V' de la suite et l'applique, à la prochaine échéance N+1, à au moins un des dispositifs de production 110 et de stockage 120, 122. De préférence, si un dispositif de production est commandé, il s'agit d'un dispositif de production pilotable comme un groupe électrogène.

Avantageusement, la détermination de la commande V' à partir d'une combinaison des prédictions à mémoire courte et à mémoire longue permet d'obtenir une commande optimisée à la fois pour des événements connus et appris par le ou les réseaux de neurones 146 et pour des événements dont la survenue est inédite.

La boucle d'étapes étant réalisée pour chaque échéance, elle est en particulier réalisée pour l'échéance N+h. Ainsi, au cours de l'étape 220 pour cette échéance N+h, le premier dispositif de mesure 134 réalise une nouvelle mesure Pe(N+h) du paramètre extrinsèque Pe à l'échéance N+h. Cette nouvelle mesure Pe(N+h) peut ainsi être comparée aux différentes prédictions qui ont auparavant été réalisées, afin de mettre à jour le module de prédiction à mémoire longue 140.

Ainsi, au cours d'une étape 264, le module de mise à jour 152 met à jour les coefficients d'importance à partir de la nouvelle mesure Pe(N+h).

Au cours d'une étape 268, le module de mise à jour 152 entraîne incrémentalement le réseau de neurones 146 à partir des coefficients d'importance mis à jour à l'étape 264 et de la nouvelle mesure Pe(N+h). Cet entraînement incrémental est de préférence réalisé à taux d'apprentissage initial faible, avec un moment d'apprentissage nul et avec un nombre maximal d'itérations à 50, afin d'assurer une convergence lente pour limiter les risques d'oublis. Plus précisément, plus un coefficient d'importance indique un poids élevé dans la sortie du réseau de neurones 146, moins des poids d'entrée et/ou sortie et/ou la fonction d'activation du neurone associé à ce coefficient d'importance est modifiée. Ainsi, l'utilisation des coefficients d'importance participe à la limitation de l'effet d'oubli catastrophique.

Grâce à l'entraînement incrémental, chaque réseau de neurones 146 garde en mémoire au moins une partie des événements qui se sont produits non seulement sur l'intervalle de temps d'entraînement, mais également depuis la mise en fonctionnement de l'installation 102. Ainsi, la mémoire de chaque réseau de neurones 146 est encore plus longue que l'intervalle de temps d'entraînement. Ainsi, lors de la prédiction de l'étape 240, chaque réseau de neurones 146 a été préalablement entraîné à partir de mesures du paramètre extrinsèque Pe ayant un âge élevé, en tout cas plus supérieur au seuil de mémoire courte MC.

Ainsi, dans la mesure où le réseau de neurones 146 continue de s'entraîner au cours du temps, la prédiction qu'il génère tend à s'adapter (i.e. à améliorer ses performances) à des évènements qui sont initialement mieux prédits par la prédiction à mémoire courte du module de prédiction à mémoire courte 142.

Au cours d'une étape 272, le réseau de neurones 146 après l'entraînement incrémental de l'étape 268 prédit une nouvelle valeur du paramètre extrinsèque Pe à l'échéance N+h, dite valeur prédite corrigée et notée P(N+h)*.

Au cours d'une étape 274, le module de mise à jour 152 compare la valeur prédite corrigée P(N+h)* à la valeur prédite à mémoire courte PC(N+h).

Au cours d'une étape 276, si la valeur prédite à mémoire courte PC(N+h) est meilleure que la valeur prédite corrigée P(N+h)*, c'est-à-dire par exemple plus proche de la mesure Pe(N+h) que la valeur prédite corrigée P(N+h)*, le module de mise à jour 152 ajoute, dans une couche cachée du réseau de neurones 146, un nouveau neurone, appelé wavelon et dédié à la nouvelle mesure Pe(N+h). Les paramètres de ce nouveau wavelon sont choisis de telle sorte que la sortie du réseau de neurone 146 donne sensiblement la valeur Pe(N+h) lorsque les mêmes données d'entrée sont utilisées. Un coefficient d'importance, par exemple nul, est associé au wavelon ajouté.

Au cours d'une étape 280, le module de mise à jour 152 met à jour les coefficients de pondération $\alpha$, $\beta$ de la combinaison des prédictions à long terme et à court terme. Cette mise à jour est réalisée pour augmenter le poids de la prédiction le plus proche de la mesure Pe(N+h), par rapport à l'autre prédiction.

Il apparaît clairement qu'un procédé de commande d'une station d'alimentation électrique tel que celui décrit précédemment permet de limiter le risque d'oubli catastrophique et/ou de s'adapter à des événements dont la survenue est inédite.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, en variante, les coefficients d'importance peuvent eux-mêmes être affectés d'un facteur d'oubli conçu pour diminuer progressivement l'impact de mesures très anciennes dans la prédiction réalisée par le réseau de neurones. Par exemple, un facteur d'oubli peut être une valeur comprise entre 0 et 1 par laquelle le coefficient d'importance d'un neurone est multiplié à chaque itération de l'entraînement dudit réseau de neurones de manière à décroître plus ou moins rapidement. Ainsi, même pour les neurones dont le poids est important dans la prédiction finale, le coefficient d'importance affecté à la fonction d'activation du neurone peut diminuer avec le temps.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

**Revendications**

1. Procédé (200) de commande d'une station d'alimentation électrique (106) comportant au moins un dispositif (110) de production d'énergie électrique à partir d'une source d'énergie renouvelable naturelle et au moins un dispositif (120, 122) de stockage de l'énergie électrique produite, comportant :

   - la prédiction (240) par un réseau de neurones à ondelettes (146) d'une première valeur (PL(N+h)) d'un paramètre extrinsèque (Pe) à la station (106) à un instant de prédiction futur prédéfini (N+h) à partir de mesures du paramètre extrinsèque (Pe) ; et
   - la commande (260) d'au moins un parmi les dispositifs de production et de stockage (110, 120, 122) à partir d'une commande (V') ;

   **caractérisé en ce qu'**il comporte en outre :

   - la prédiction (232) d'une deuxième valeur (PC(N+h)) du paramètre extrinsèque (Pe) à l'instant de prédiction (N+h) à partir de mesures du paramètre extrinsèque (Pe) ayant toutes un âge inférieur à un seuil prédéfini, indépendamment de toute mesure du paramètre extrinsèque (Pe) ayant un âge supérieur à ce seuil prédéfini, le réseau de neurones à ondelettes (146) ayant été entraîné à partir de mesures du paramètre extrinsèque (Pe) ayant un âge supérieur au seuil prédéfini ; et
   - la détermination (244) d'une troisième valeur prédite (P(N+h)) du paramètre extrinsèque (Pe) à l'instant de prédiction (N+h) à partir des première et deuxième valeurs prédites (PL(N+h), PC(N+h)), la commande (V') étant déterminée à partir de la troisième valeur prédite (P(N+h)) du paramètre extrinsèque (Pe) ; et
   - l'entraînement incrémental (268) du réseau de neurones à ondelettes (146) à partir d'une comparaison entre la première valeur prédite (PL(N+h)) du paramètre extrinsèque (Pe) et une mesure (Pe(N+h)) du paramètre extrinsèque (Pe) à l'instant de prédiction (N+h).

2. Procédé selon la revendication 1, dans lequel le paramètre extrinsèque (Pe) est l'un parmi : une température ambiante de la station (106), un éclairement de panneaux solaires (112) de la station (106) et une puissance électrique (PC) consommée par une charge (104) connectée à la station (106).

3. Procédé selon la revendication 1 ou 2, dans lequel le réseau de neurones à ondelettes (146) comporte des neurones auxquels des coefficients d'importance sont respectivement associés, et dans lequel, lors de l'entraînement incrémental, au moins une partie de ces neurones est modifiée en tenant compte de leurs coefficients d'importance associés.

4. Procédé selon la revendication 3, dans lequel chaque coefficient d'importance est représentatif d'un poids, dans la prédiction réalisée par le réseau de neurones, du neurone caché associé.

5. Procédé selon l'une quelconque des revendications 1 à 4, dans lequel l'entraînement incrémental comporte :

   - la détermination de distances entre la mesure (Pe(N+h)) du paramètre extrinsèque (Pe) à l'instant de prédiction (N+h) et respectivement les première et deuxième valeurs prédites (PL(N+h), PC(N+h)) du paramètre extrinsèque (Pe) à l'instant de prédiction (N+h) ; et
   - en fonction des distances déterminées, l'ajout ou non d'un neurone supplémentaire au réseau de neurones à ondelettes (146).

**6.** Procédé selon l'une quelconque des revendications 1 à 5, dans lequel la deuxième valeur prédite (PC(N+h)) du paramètre extrinsèque (Pe) est une moyenne des mesures du paramètre extrinsèque (Pe) utilisées pour cette prédiction.

**7.** Procédé selon l'une quelconque des revendications 1 à 6, dans lequel la commande (V') est en outre déterminée à partir d'au moins une mesure (Pi(N)) d'au moins un paramètre d'état (Pi) de la station (106).

**8.** Procédé selon l'une quelconque des revendications 1 à 7, dans lequel la troisième valeur prédite (P(N+h) est une somme pondérée des première et deuxième valeurs prédites (PC(N+h), PL(N+h)).

**9.** Programme d'ordinateur téléchargeable depuis un réseau de communication et/ou enregistré sur un support lisible par ordinateur, **caractérisé en ce qu'**il comprend des instructions pour l'exécution des étapes d'un procédé de commande selon l'une quelconque des revendications 1 à 8, lorsque ledit programme est exécuté sur un ordinateur.

**10.** Dispositif (108) de commande d'une station d'alimentation électrique (106) comportant au moins un dispositif (110) de production d'énergie électrique à partir d'une source d'énergie renouvelable naturelle et au moins un dispositif (120, 122) de stockage de l'énergie électrique produite, comportant :

- un premier module de prédiction (144) par un réseau de neurones à ondelettes (146) d'une première valeur (PL(N+h)) d'un paramètre extrinsèque (Pe) à la station (106) à un instant de prédiction futur prédéfini (N+h) à partir de mesures du paramètre extrinsèque (Pe) ; et
- un module de commande (150) d'au moins un parmi les dispositifs de production et de stockage (110, 120, 122) à partir d'une commande (V') ;

**caractérisé en ce que** le dispositif (108) comporte en outre :

- un deuxième module de prédiction (142) d'une deuxième valeur (PC(N+h)) du paramètre extrinsèque (Pe) à l'instant de prédiction (N+h) à partir de mesures du paramètre extrinsèque (Pe) ayant toutes un âge inférieur à un seuil prédéfini, indépendamment de toute mesure du paramètre extrinsèque (Pe) ayant un âge supérieur à ce seuil prédéfini, le réseau de neurones à ondelettes (146) ayant été entraîné à partir de mesures du paramètres extrinsèque (Pe) ayant un âge supérieur au seuil prédéfini ; et
- un module de combinaison (148) conçu pour déterminer une troisième valeur prédite (P(N+h)) du paramètre extrinsèque (Pe) à l'instant de prédiction (N+h) à partir des première et deuxième valeurs prédites (PL(N+h), PC(N+h)), le module de commande (150) étant conçu pour déterminer la commandes (V') à partir de la troisième valeur prédite (P(N+h)) du paramètre extrinsèque (Pe) ; et
- un module de mise à jour (152) conçu pour entraîner incrémentalement le réseau de neurones à ondelettes (146) à partir d'une comparaison entre la première valeur prédite (PL(N+h)) du paramètre extrinsèque (Pe) et une mesure (Pe(N+h)) du paramètre extrinsèque (Pe) à l'instant de prédiction (N+h).

**Patentansprüche**

**1.** Verfahren (200) zur Steuerung einer elektrischen Versorgungsstation (106), die mindestens eine Vorrichtung (110) zur Erzeugung von elektrischer Energie aus einer natürlichen erneuerbaren Energiequelle und mindestens eine Vorrichtung (120, 122) zur Speicherung der erzeugten elektrischen Energie umfasst, umfassend:

- die Vorhersage (240) durch ein neuronales Wavelet-Netzwerk (146) eines ersten Wertes (PL(N+h)) eines extrinsischen Parameters (Pe) an der Station (106) zu einem vordefinierten zukünftigen Vorhersagezeitpunkt (N+h) anhand von Messungen des extrinsischen Parameters (Pe); und
- die Steuerung (260) mindestens einer aus den Erzeugungs- und Speichervorrichtungen (110, 120, 122) anhand eines Befehls (V');

**dadurch gekennzeichnet, dass** es weiter umfasst:

- die Vorhersage (232) eines zweiten Wertes (PC(N+h)) des extrinsischen Parameters (Pe) zum Vorhersagezeitpunkt (N+h) anhand von Messungen des extrinsischen Parameters (Pe), die alle ein Alter unterhalb einer vordefinierten Schwelle haben, unabhängig von jeglicher Messung des extrinsischen Parameters (Pe), die ein Alter oberhalb dieser vordefinierten Schwelle hat, wobei das neuronale Wavelet-Netzwerk (146) anhand von Messungen des extrinsischen Parameters (Pe) trainiert wurde, die ein Alter oberhalb der vordefinierten Schwelle haben; und

- die Bestimmung (244) eines dritten vorhergesagten Wertes (P(N+h)) des extrinsischen Parameters (Pe) zum Vorhersagezeitpunkt (N+h) anhand des ersten und des zweiten vorhergesagten Wertes (PL(N+h), PC(N+h)), wobei der Befehl (V') anhand des dritten vorhergesagten Wertes (P(N+h)) des extrinsischen Parameters (Pe) bestimmt wird; und

- das inkrementelle Training (268) des neuronalen Wavelet-Netzwerks (146) anhand eines Vergleichs zwischen dem ersten vorhergesagten Wert (PL(N+h)) des extrinsischen Parameters (Pe) und einer Messung (Pe(N+h)) des extrinsischen Parameters (Pe) zum Vorhersagezeitpunkt (N+h).

2. Verfahren nach Anspruch 1, wobei der extrinsische Parameter (Pe) einer ist aus: einer Umgebungstemperatur der Station (106), einer Beleuchtungsstärke von Solarpaneelen (112) der Station (106) und einer elektrischen Leistung (PC), die von einem mit der Station (106) verbundenen Last (104) verbraucht wird.

3. Verfahren nach Anspruch 1 oder 2, wobei das neuronale Wavelet-Netzwerk (146) Neuronen umfasst, denen jeweils Bedeutungskoeffizienten zugeordnet sind, und wobei beim inkrementellen Training mindestens ein Teil dieser Neuronen unter Berücksichtigung ihrer zugeordneten Bedeutungskoeffizienten verändert wird.

4. Verfahren nach Anspruch 3, wobei jeder Gewichtungskoeffizient ein Gewicht in der durch das neuronale Netzwerk durchgeführten Vorhersage des zugeordneten verborgenen Neurons darstellt.

5. Verfahren nach einem der Ansprüche 1 bis 4, wobei das inkrementelle Training umfasst:

- die Bestimmung von Abständen zwischen der Messung (Pe(N+h)) des extrinsischen Parameters (Pe) zum Vorhersagezeitpunkt (N+h) und dem ersten bzw. zweiten vorhergesagten Wert (PL(N+h), PC(N+h)) des extrinsischen Parameters (Pe) zum Vorhersagezeitpunkt (N+h); und

- in Abhängigkeit von den bestimmten Abständen, das Hinzufügen oder Nichthinzufügen eines zusätzlichen Neurons zum neuronalen Wavelet-Netzwerk (146).

6. Verfahren nach einem der Ansprüche 1 bis 5, wobei der zweite vorhergesagte Wert (PC(N+h)) des extrinsischen Parameters (Pe) ein Mittelwert der Messungen des extrinsischen Parameters (Pe) ist, die für diese Vorhersage verwendet werden.

7. Verfahren nach einem der Ansprüche 1 bis 6, wobei der Befehl (V') weiter anhand mindestens einer Messung (Pi(N)) von mindestens einem Zustandsparameter (Pi) der Station (106) bestimmt wird.

8. Verfahren nach einem der Ansprüche 1 bis 7, wobei der dritte vorhergesagte Wert (P(N+h)) eine gewichtete Summe des ersten und zweiten vorhergesagten Wertes (PC(N+h), PL(N+h)) ist.

9. Computerprogramm, das von einem Kommunikationsnetzwerk herunterladbar und/oder auf einem computerlesbaren Träger aufgezeichnet ist, **dadurch gekennzeichnet, dass** es Anweisungen für die Ausführung der Schritte eines Steuerungsverfahrens nach einem der Ansprüche 1 bis 8, wenn das Programm auf einem Computer ausgeführt wird, umfasst.

10. Vorrichtung (108) zur Steuerung einer elektrischen Versorgungsstation (106), die mindestens eine Vorrichtung (110) zur Erzeugung von elektrischer Energie aus einer natürlichen erneuerbaren Energiequelle und mindestens eine Vorrichtung (120, 122) zur Speicherung der erzeugten elektrischen Energie umfasst, umfassend:

- ein erstes Modul zur Vorhersage (144) durch ein neuronales Wavelet-Netzwerk (146) eines ersten Wertes (PL(N+h)) eines extrinsischen Parameters (Pe) an der Station (106) zu einem vordefinierten zukünftigen Vorhersagezeitpunkt (N+h) anhand von Messungen des extrinsischen Parameters (Pe); und

- ein Modul (150) zur Steuerung mindestens einer aus den Erzeugungs- und Speichervorrichtungen (110, 120, 122) anhand eines Befehls (V');

**dadurch gekennzeichnet, dass** die Vorrichtung (108) weiter umfasst:

- ein zweites Modul (142) zur Vorhersage eines zweiten Wertes (PC(N+h)) des extrinsischen Parameters (Pe) zum Vorhersagezeitpunkt (N+h) anhand von Messungen des extrinsischen Parameters (Pe), die alle ein Alter unterhalb einer vordefinierten Schwelle haben, unabhängig von jeder Messung des extrinsischen Parameters (Pe), die ein Alter oberhalb dieser vordefinierten Schwelle hat, wobei das neuronale Wavelet-Netzwerk (146) anhand von Messungen des extrinsischen Parameters (Pe) trainiert wurde, die ein Alter oberhalb der vordefinierten Schwelle haben; und

- ein Kombinationsmodul (148), das dazu ausgelegt ist, einen dritten vorhergesagten Wert (P(N+h)) des extrinsischen Parameters (Pe) zum Vorhersagezeitpunkt (N+h) anhand des ersten und des zweiten vorhergesagten Wertes (PL(N+h), PC(N+h)) zu bestimmen, wobei das Steuermodul (150) dazu ausgelegt ist, den Befehl (V') anhand des dritten vorhergesagten Wertes (P(N+h)) des extrinsischen Parameters (Pe) zu bestimmen; und

- ein Aktualisierungsmodul (152), das dazu ausgelegt ist, das neuronale Wavelet-Netzwerk (146) anhand eines Vergleichs zwischen dem ersten vorhergesagten Wert (PL(N+h)) des extrinsischen Parameters (Pe) und einer Messung (Pe(N+h)) des extrinsischen Parameters (Pe) zum Vorhersagezeitpunkt (N+h) inkrementell zu trainieren.

**Claims**

1. A method (200) for controlling an electrical power supply station (106) comprising at least one device (110) for producing electrical energy from a natural renewable energy source and at least one device (120, 122) for storing the electrical energy produced, comprising:

   - predicting (240) by a wavelet neural network (146) of a first value (PL(N+h)) of an extrinsic parameter (Pe) at the station (106) at a predefined future prediction time (N+h) from measurements of the extrinsic parameter (Pe); and
   - controlling (260) at least one of the production and storage devices (110, 120, 122) on the basis of a command (V');

   **characterised in that** it further comprises:

   - predicting (232) a second value (PC(N+h)) of the extrinsic parameter (Pe) at the prediction time (N+h) on the basis of measurements of the extrinsic parameter (Pe) all having an age less than a predefined threshold, independently of any measurement of the extrinsic parameter (Pe) having an age greater than this predefined threshold, the wavelet neural network (146) having been trained on the basis of measurements of the extrinsic parameter (Pe) having an age greater than the predefined threshold ; and
   - determining (244) a third predicted value (P(N+h)) of the extrinsic parameter (Pe) at the prediction time (N+h) from the first and second predicted values (PL(N+h), PC(N+h)), the command (V') being determined from the third predicted value (P(N+h)) of the extrinsic parameter (Pe); and
   - incrementally training (268) the wavelet neural network (146) from a comparison between the first predicted value (PL(N+h)) of the extrinsic parameter (Pe) and a measurement (Pe(N+h)) of the extrinsic parameter (Pe) at the prediction time (N+h).

2. The method according to claim 1, wherein the extrinsic parameter (Pe) is one of: an ambient temperature of the station (106), an illuminance of solar panels (112) of the station (106) and an electrical power (PC) consumed by a load (104) connected to the station (106).

3. The method according to claim 1 or 2, wherein the wavelet neural network (146) comprises neurons to which significance coefficients are respectively associated, and wherein, during incremental training, at least some of these neurons are modified taking account of their associated significance coefficients.

4. The method according to claim 3, wherein each significance coefficient is representative of a weight, in the prediction made by the neural network, of the associated hidden neuron.

5. The method according to any one of claims 1 to 4, wherein the incremental training comprises:

   - determining distances between the measurement (Pe(N+h)) of the extrinsic parameter (Pe) at the prediction time (N+h) and respectively the first and second predicted values (PL(N+h), PC(N+h)) of the extrinsic parameter (Pe) at the prediction time (N+h); and
   - as a function of the determined distances, adding or not adding an additional neuron to the wavelet neural network (146).

6. The method according to any one of claims 1 to 5, wherein the second predicted value (PC(N+h)) of the extrinsic parameter (Pe) is an average of the measurements of the extrinsic parameter (Pe) used for that prediction.

7. The method according to any one of claims 1 to 6, wherein the command (V') is further determined from at least one measurement (Pi(N)) of at least one state parameter (Pi) of the station (106).

8. The method according to any one of claims 1 to 7, wherein the third predicted value (P(N+h)) is a weighted sum of the first and second predicted values (PC(N+h), PL(N+h)).

9. A computer program downloadable from a communication network and/or recorded on a computer-readable medium, **characterised in that** it comprises instructions for executing the steps of a control method according to any one of claims 1 to 8, when said program is executed on a computer.

10. A device (108) for controlling an electrical power supply station (106) comprising at least one device (110) for producing electrical energy from a natural renewable energy source and at least one device (120, 122) for storing the electrical energy produced, comprising:

  - a first module (144) for predicting, by means of a wavelet neural network (146), a first value (PL(N+h)) of an extrinsic parameter (Pe) at the station (106) at a predefined future prediction time (N+h) from measurements of the extrinsic parameter (Pe); and
  - a module (150) for controlling at least one of the production and storage devices (110, 120, 122) from a command (V');
  **characterised in that** the device (108) further comprises:

    - a second module (142) for predicting a second value (PC(N+h)) of the extrinsic parameter (Pe) at the prediction time (N+h) from measurements of the extrinsic parameter (Pe) all having an age less than a predefined threshold, independently of any measurement of the extrinsic parameter (Pe) having an age greater than this predefined threshold, the wavelet neural network (146) having been trained from measurements of the extrinsic parameters (Pe) having an age greater than the predefined threshold ; and
    - a combination module (148) arranged to determine a third predicted value (P(N+h)) of the extrinsic parameter (Pe) at the prediction time (N+h) from the first and second predicted values (PL(N+h), PC(N+h)), the control module (150) being arranged to determine the command (V') from the third predicted value (P(N+h)) of the extrinsic parameter (Pe); and
    - an update module (152) arranged to incrementally train the wavelet neural network (146) from a comparison between the first predicted value (PL(N+h)) of the extrinsic parameter (Pe) and a measurement (Pe(N+h)) of the extrinsic parameter (Pe) at the prediction time (N+h).

# Figure 1

Figure 2

```
 ┌─────────┐
 │ - 204 - │
 └────┬────┘
      ▼
 ┌─────────┐
 │ - 208 - │
 └────┬────┘
      ▼
 ┌─────────┐
 │ - 212 - │
 └─────────┘
```

214

```
┌──────────────────────┐
│ - 216 -              │
│   ┌─────────┐        │
│   │ - 220 - │        │
│   └────┬────┘        │
│        ▼             │
│   ┌─────────┐        │
│   │ - 224 - │        │
│   └────┬────┘        │
│        ▼             │
│   ┌─────────┐        │
│   │ - 228 - │        │
│   └────┬────┘        │
│        ▼             │
│   ┌─────────┐        │
│   │ - 232 - │        │
│   └────┬────┘        │
│        ▼             │
│   ┌─────────┐        │
│   │ - 236 - │        │
│   └────┬────┘        │
│        ▼             │
│   ┌─────────┐        │
│   │ - 240 - │        │
│   └────┬────┘        │
│        ▼             │
│   ┌─────────┐        │
│   │ - 244 - │        │
│   └─────────┘        │
└──────────────────────┘

┌──────────────────────┐
│ - 248 -              │
│   ┌─────────┐        │
│   │ - 252 - │        │
│   └────┬────┘        │
│        ▼             │
│   ┌─────────┐        │
│   │ - 256 - │        │
│   └────┬────┘        │
│        ▼             │
│   ┌─────────┐        │
│   │ - 260 - │        │
│   └─────────┘        │
└──────────────────────┘
```

```
 ┌─────────┐
 │ - 264 - │
 └────┬────┘
      ▼
 ┌─────────┐
 │ - 268 - │
 └────┬────┘
      ▼
 ┌─────────┐
 │ - 272 - │
 └────┬────┘
      ▼
 ┌─────────┐
 │ - 276 - │
 └────┬────┘
      ▼
 ┌─────────┐
 │ - 280 - │
 └─────────┘
```

200

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MORIN et al.** *Energy management of isolated DC microgrids with hybrid batteries-hydrogen storage system using model prédictive control and wavelet neural networks based forecasts,* Septembre 2019